# EUROPEAN PATENT APPLICATION

(11) **EP 1 591 927 A2**
(43) Date of publication of application: **02.11.2005**
(21) Application number: 05252389.1
(22) Date of filing: 16.04.2005
(51) Int. Cl.: G06F 17/30

(54) **Method, recording medium, and apparatus for correcting the LastURL field in an MPV file**

(30) Priority: 26.04.2004 KR 2004028637
(71) Applicant: SAMSUNG ELECTRONICS CO., LTD., Suwon-si, Gyeonggi-do (KR)
(72) Inventor: Ahn, Jin-Yong, Suwon-si Gyeonggi-do (KR); Kim, Du-il, Yeongtong-gu Suwon-si Gyeonggi-do (KR)
(74) Representative: Waddington, Richard

(57) **Abstract**

A method and apparatus for fixing up a last uniform resource locator (LastURL) representing the location of a content asset, and a computer readable recording medium storing a program to implement the method are provided. The LastURL fixup method includes managing location change information on location change of the content asset and fixing up a LastURL by referring to the location change information. According to the method and apparatus, a time for fixing up can be effectively reduced such that the speed of an application to response to a user can be enhanced and the processing power can be greatly saved.

## Description

The present invention relates to controlling assets in a multimedia application environment, and more particularly, to a method and apparatus for fixing up a last uniform resource locator (LastURL) representing the location of a content asset, and a computer readable recording medium storing a program to implement the method.

Presently, media such as digital still images, video, digital audio and text are processed and reproduced by personal computers. Also, as apparatuses generating these media, for example, digital cameras, digital camcorders, digital audio players (MP3, WMA), are increasingly more widely used, a variety of types of digital contents are being generated.

However, in order to manage the large volume of multimedia data generated by such apparatuses, the multimedia data must be managed by file systems of the respective devices. However, if multimedia files, which may include attribute data such as a data reproduction order or method, are reproduced in an apparatus other than a PC, the attribute data given in the PC will be lost and only the original data will be transferred. Thus, interoperability of data and data attributes among consumer electronic products, PCs, and digital content generating apparatuses is very weak at present. Examples of weakness of interoperability are explained below.

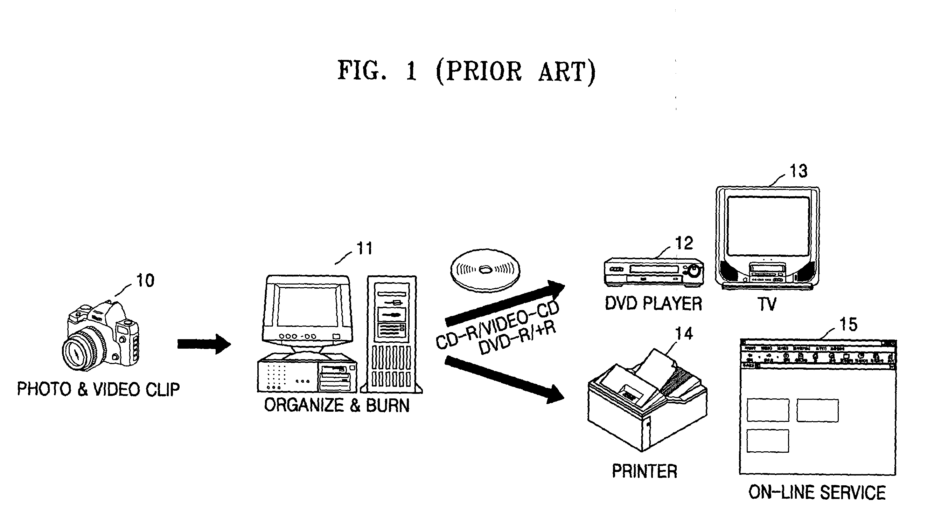

FIG. 1 is a reference diagram explaining the concept of MusicPhotoVideo (MPV) according to a conventional technology.

Referring to FIG. 1, a digital camera 10 generates a photo or video clip and the generated photo or video clip is transferred to a PC 11. At PC 11, operations such as editing may be performed, and the content may be recorded on an optical recording medium such as a CD-R/Video-CD and a DVD-R/+R. The optical recording medium storing the content can reproduce the content in a DVD player 12 or a TV 13. Also, the content transferred to the PC 11 can be further transferred to a printer 14 and to an online medium 15.

Thus, a digital camera may generate a photo along with attribute data. The attribute data may include information such as a slide show order or a time interval between the display of the photos in a slide show, and the relation between photos taken with a panoramic function of the camera. Such attribute data is stored together with the original data. If the digital camera is connected to a TV through an audio/video (AV) cable and an image is transmitted to the TV, the content with each attribute expressed can be viewed by a user. However, if the digital camera is connected to a PC through a universal serial bus (USB) cable, only the original data is transmitted to the computer and all the attached attributes are lost. This is because the digital camera and the PC have information structures and data processing methods different from each other. As shown in the above example, the attribute data stored in the digital camera (i.e., metadata) has no interoperability with the PC. In order to provide a limited form of interoperability, a standard referred to as MusicPhotoVideo (MPV) has been being proposed. That is, the MPV is a standard to further ease expression, exchange, processing, and reproduction of metadata such as digital music, photos, and video in consumer electronics (CE) apparatuses and IT apparatuses.

The MPV standard, which is currently being prepared by Optical Storage Technology Association (OSTA), defines manifest, metadata, and practice to process and reproduce sets of contents, such as digital photos, video, and audio, stored in a storage medium such as an optical disk, a memory card, a computer hard disk, or exchanged according to Internet protocols. The manifest is an independent extensible markup language (XML) document file and obtained by grouping all MPV elements.

The MPV is generally broken down into two parts: MPV core specification (MPV Core-Spec.) and Profile. The MPV Core includes three basic elements: collection, metadata, and identifier. The collection includes a manifest as a root member, an album, marked assets (MarkedAsset), and an asset list (AssetList). An asset is a basic unit of contents processed by the MPV. Further, there are two types of assets: a simple media asset such as digital photos, video, digital audio, and documents, etc., and a composite media asset such as digital photos + digital audio, digital still multi-shot sequences, digital still panorama sequences, etc. An identifier (ID) includes a last uniform resource locator (LastURL) representing a path name and a file name of an asset, an InstanceID that is the unique ID of an asset, a DocumentID having an identical name in both original data and changed data, a ContentID generated based on the actual content of an asset, and an id that is a local identifier in metadata. A LastURL is a "last known location" specifying the storage location of an asset in a manifest file.

Based on the contents recorded in an MPV file having this structure, MPV software manages asset reading and reproduction. That is, the MPV file is placed between MPV software and asset data and plays a linking role.

Accordingly, the MPV file can be regarded as a file system in a higher level operating similarly to the conventional file system.

MPV software manages an asset through an MPV file having this structure involving the use of an identifier referred to as a LastURL, in particular. However, in a PC, the MPV asset is exposed not only to the direct control of the MPV software but also to the direct control of other application software. As a result, a problem arises in file management operations, such as rename, move and delete operations, wherein the content of the MPV file can be changed from that of the actual asset. In particular, a LastURL corresponding to a file name and a path name can be broken.

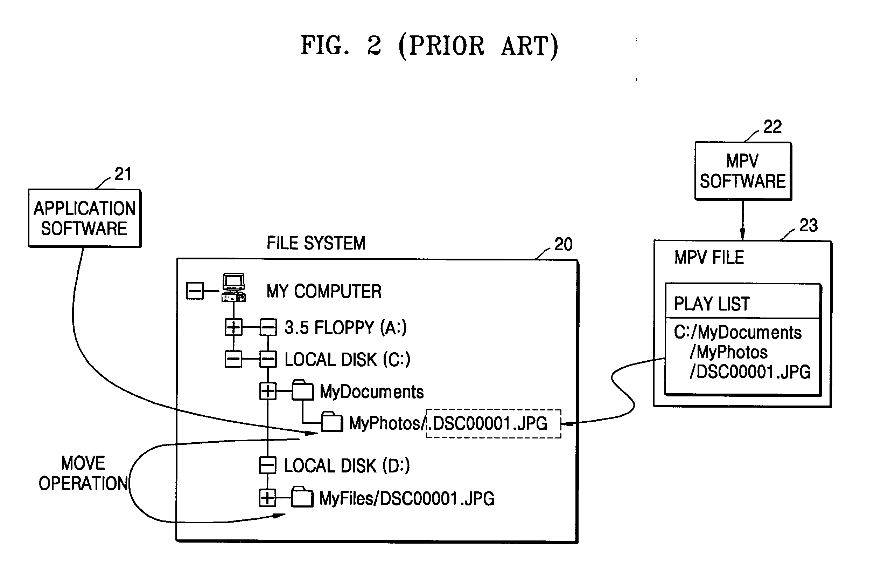

FIG. 2 is a reference diagram explaining a problem when a LastURL is changed according to the conventional technology.

FIG. 2 shows an example of a situation where an MPV asset is changed by application software other than MPV software. MPV software 22 controls an asset, DSC00001.JPG, through a LastURL recorded in an MPV file 23. However, other application software 21 can move C:\Mydocuments\MyPhotos\DSC00001.JPG to D:\MyFiles\DSC00001^{.}JPG through a file system 20. In this case, the MPV file 23 has only the LastURL C:\Mydocuments\MyPhotos\DSC00001.JPG still and with this LastURL, the MPV software cannot control the corresponding asset. Accordingly, a limited method for fixing up the broken LastURL is proposed by the MPV standard.

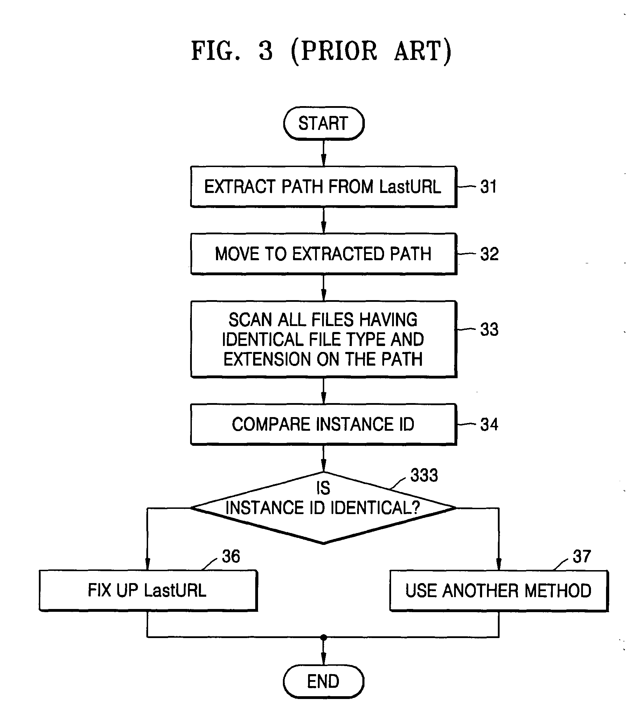

FIG. 3 is a flowchart of the steps performed by a method for fixing up a LastURL according to the conventional technology.

First, a path name is extracted from a current LastURL in operation 31, and the extracted path is visited in operation 32. In the path, all files having a file type and extension identical to those of the file of an asset are scanned in operation 33. Next, the InstanceID of a retrieved file is compared with the InstanceID of the asset in operation 34, and if there is a matching file (i.e., the instance ID is determined to be identical in operation 35), a LastURL is fixed up with the matching file name and path name in operation 36. An InstanceID is an ID to an asset and, when an InstanceID relates to an ID embedded in data according to the file format of the corresponding asset, a desired asset can be found according to the file format of the corresponding asset. Also, a desired asset can be found through a content ID (for example, MD5-HASH content ID) generated based on the actual content of the asset. Here, the meaning of "fix up" refers to correcting the path of a LastURL by using the path of a retrieved matching file.

If a matching file is not found, another method is performed in operation 37. For example, the entire hard disk drive may be searched.

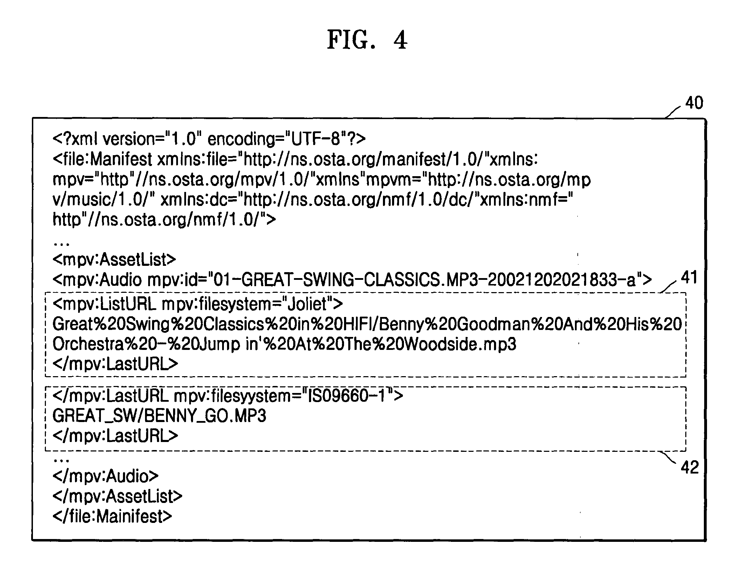

FIG. 4 is a diagram showing an example of a LastURL reference file according to the conventional technology. Referring to FIG. 4, it can be seen that in the LastURL reference file 40, there is an asset list (AssetList) under a largest group referred to as a manifest, and an audio asset is in the AssetList. The audio asset has two LastURLs: one is a LastURL 41 when the file system is "Joliet", and the other is a LastURL 42 when the file system is "IS09660-1".

However, according to the conventional LastURL fixup method, if a corresponding asset is not in a path extracted from a fixup object LastURL, tthe entire disk must be searched, and this takes a substantial amount of time.

Also, in order to fix up a broken LastURL in an optical disk (for example, a DVD-RAM disk) in which it is highly probable that almost all asset data are stored in an identical path on the disk, comparing all of the IDs can be a complicated task. In particular, this causes a serious problem in an embedded system with a lower processing power, such as a DVD player.

Furthermore, the storage capacities of devices storing content is currently increasing rapidly, as are the number and types of contents. Accordingly, the time delay for fixing up a LastURL and consumption of system resources becomes a more significant problem.

In addition, in the case of an optical storage apparatus, a time for fixing up a LastURL increases unpredictably as the frequency of random accesses increases.

The present invention provides a last uniform resource locator (LastURL) fixup method and apparatus capable of rapidly fixing up a LastURL indicating the location of a content asset in a multimedia application environment, and a computer readable recording medium storing a program for performing the method.

According to the present invention there is provided an apparatus and method as set forth in the appended claims. Preferred features of the invention will be apparent from the dependent claims, and the description which follows.

According to an aspect of the present invention, there is provided a method for fixing up a last uniform resource locator (LastURL) representing the location of a content asset in a multimedia application environment, the method including: managing location change information on the location change of the content asset; and fixing up a LastURL by referring to the location change information.

In the method, managing location change information may include: obtaining location change information of the content asset; and storing the obtained location change information in a log.

Also, obtaining location change information may include: monitoring the operation of a file system related to the location change of the content asset; and extracting location change information of the content asset from a location change operation of the content asset.

In the method, the location change operations of the content asset of the file system may include at least one of move, delete, and rename.

Also, storing the obtained location change information in a log may include: converting the location change information of the asset into a log information item to be stored in the log; and storing the converted log information item in the log.

Also, the log information item may include at least one of the type of a location change operation of the asset, a source indicating a LastURL before the location of the asset changes, and a target indicating a LastURL after the location of the asset changes.

Also, fixing up a LastURL may include: retrieving a log information item having a source identical to a fixup object LastURL in the log; and fixing up the fixup object LastURL by using a LastURL corresponding to the target of the retrieved log information item.

According to another aspect of the present invention, there is provided a method for fixing up a LastURL representing the location of a content asset in a multimedia application environment, the method including: recording location change information on the location change of the content asset, in a log; and providing the location change information recorded in the log, to an application controlling the content asset.

According to still another aspect of the present invention, there is provided a method for fixing up a LastURL representing the location of a content asset in a multimedia application environment, the method including: obtaining location change information of a content asset having an invalid LastURL from a log in which location change information on the location change of the content asset is recorded; and fixing up the invalid LastURL by using the obtained location change information.

According to yet still another aspect of the present invention, there is provided an apparatus for fixing up a LastURL representing the location of a content asset in a multimedia application environment, the apparatus including: a management unit which manages location change information on the location change of the content asset; and a fixup unit which fixes up a LastURL by referring to the location change information.

The management unit may include: a file system event manager which obtains location change information of the content asset; and a log manager which stores the obtained location change information in a log.

The file system event manager may monitor the operation of a file system related to the location change of the content asset, and extract location change information of the content asset from a location change operation of the content asset.

The log manager may convert the location change information of the asset into a log information item to be stored in the log, and store the converted log information item in the log.

The fixup unit may retrieve a log information item having a source identical to a fixup object LastURL in the log, and fix up the fixup object LastURL by using a LastURL corresponding to the target of the retrieved log information item.

) According to a further aspect of the present invention, there is provided an apparatus for fixing up a LastURL representing the location of a content asset in a multimedia application environment, the apparatus including: a log recording unit which records location change information on the location change of the content asset, in a log; and a LastURL fixup unit which provides the location change information recorded in the log, to an application controlling the content asset.

According to an additional aspect of the present invention, there is provided an apparatus for fixing up a LastURL representing the location of a content asset in a multimedia application environment, the apparatus including: a location change information obtaining unit which obtains location change information of a content asset having an invalid LastURL from a log in which location change information on the location change of the content asset is recorded; and a LastURL fixup unit which fixes up the invalid LastURL by using the obtained ) location change information.

According to an additional aspect of the present invention, there is provided a computer readable recording medium having embodied thereon a computer program for a method for fixing up a LastURL representing the location of a content asset in a multimedia application environment, wherein the method includes: managing location change information on the location change of the content asset; and fixing up a LastURL by referring to the location change information.

For a better understanding of the invention, and to show how embodiments of the same may be carried into effect, reference will now be made, by way of example, to the accompanying diagrammatic drawings in which:
FIG. 1 is a reference diagram explaining the concept of MusicPhotoVideo (MPV) according to a conventional technology;
FIG. 2 is a reference diagram explaining a problem when a LastURL is changed according to the conventional technology;
FIG. 3 is a flowchart of the steps performed by a method for fixing up a LastURL according to the conventional technology;
FIG. 4 is a diagram showing an example of a LastURL reference file according to the conventional technology;
FIG. 5 is a schematic block diagram of a LastURL fixup apparatus according to an exemplary embodiment of the present invention;
FIG. 6 is a diagram showing examples of log information items stored in a log according to an exemplary embodiment of the present invention;
FIG. 7 is a reference diagram explaining an operation storing a log information item in an empty space of a log according to an exemplary embodiment of the present invention;
FIGS. 8A and 8B are reference diagrams explaining an operation storing a log information item when a log is full, according to an exemplary embodiment of the present invention;
FIG. 9 is a reference diagram explaining an operation retrieving a log information item stored in a log according to an exemplary embodiment of the present invention;
FIG. 10 is a flowchart of the steps performed by an operation generating a log according to an exemplary embodiment of the present invention; and
FIG. 11 is a flowchart of the steps performed by an operation fixing up a LastURL according to an exemplary embodiment of the present invention.

Aspects of the present invention will now be described more fully with reference to the accompanying drawings, in which exemplary embodiments of the invention are shown.

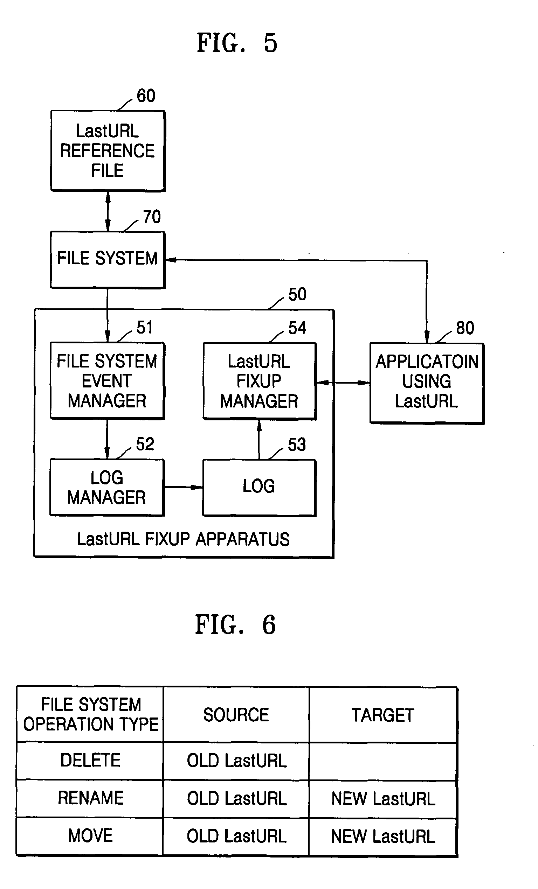

Referring to FIG. 5, a LastURL fixup apparatus according to an exemplary embodiment of the present invention includes a file system event manager 51, a log manager 52, a log 53, and a LastURL fixup manager 54.

A LastURL reference file 60 is a file referring to an asset with a LastURL, for example, *.mum, and *.pvm in an MPV file, and *.m3u as a playlist file such as MP3.
An application 80 using a LastURL reference file 60 edits a LastURL reference file 60 as an object, or reproduces an asset corresponding to a LastURL.

A file system 70 is a system performing a file management operation for the LastURL reference file 60. According to an exemplary embodiment of the present invention, deleting, renaming, and moving a file or directory are among file system operations that are the objects of monitoring by the LastURL fixup apparatus 50.

The LastURL fixup apparatus 50 monitors the file system. If there is a possibility that a LastURL of the LastURL reference file 60 is changed, the LastURL fixup apparatus 50 stores information on the change, and if there is a command from the application 80 using the LastURL reference file 60, LastURL fixup apparatus 50 retrieves LastURL change information and returns the change information to the application 80 using the LastURL reference file 60.

Whenever an operation related to the file system is performed, the file system event manager 51 monitors the operation. The file system event manager 51 confirms whether the operation occurring in the file system is deleting, renaming, or moving a file or directory. If the operation is any one of those, file system event manager 51 provides the operation information to the log manager 52.

The log manager 52 converts the operation information received from the file system event manager 51 to suit a format to be stored in the log 53.

The log 53 is a storage location storing LastURL change information changed by a file system operation as log information.

FIG. 6 is a diagram showing examples of log information items stored in the log 53 according to the an exemplary embodiment of present invention.

Each field of the log information item includes file system operation type, source, and target. The file system operation type includes "Delete", "Rename", and "Move". The source indicates a LastURL before the change by the corresponding file system operation, and the target indicates a LastURL after the change by the corresponding file system operation. A LastURL that can be in the source or target includes a directory as well as a file.

Accordingly, when a directory is changed, it does not need to make log item information for each of all files in the changed directory, and by one log information item on the changed directory, the directory change can be indicated. "Delete" refers to deletion of a file or directory. The source of this "Delete" operation is a LastURL before a file or directory is deleted, and there is no target. "Rename" refers to renaming the name of a file or directory. The source of this "Rename" operation is a LastURL before a file or directory is renamed, and the target is a LastURL after renaming the file or directory. "Move" refers to moving the location of a file or directory The source of this "Move" operation is a LastURL before moving the file or directory, and the target is a LastURL after moving the file or directory.

The log manager 52 adds log information items in the form as shown in FIG. 6, to a last empty space of the log.

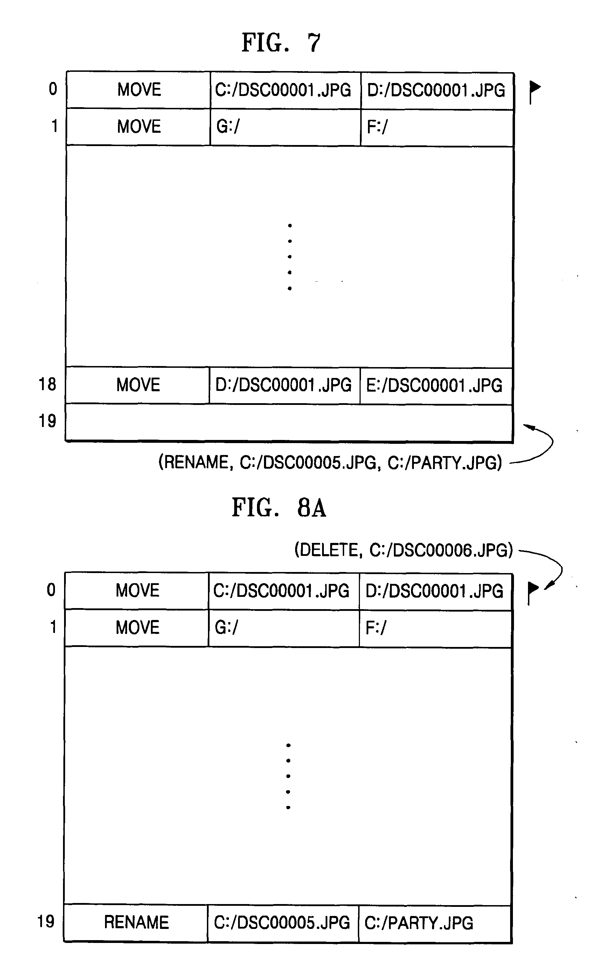

FIG. 7 shows an example of a log in which log information items are filled.

Referring to FIG. 7, a log information item with operation type "Move", source "C:\DSC00001.JPG", and target "D:\DSC00001.JPG" is stored at address 0 of the log. That is, the log information item at address 0 indicates that a file having a LastURL of "C:\DSC00001.JPG" is moved to a LastURL of "D:\DSC0001.JPG".

A log information item with operation type "Move", source "G:\", and target "F:\" is stored at address 1 of the log. That is, the log information item at address 1 indicates that a directory with a LastURL of "G:\" is moved to a LastURL of "F:\".

At address 18 of the log, a log information item with operation type "Move", source "D:\DSC00001.JPG", and target "E:\DSC00001.JPG" is stored. That is, the log information item stored at address 18 indicates that a file with a LastURL of "D:\DSC00001.JPG" is moved to a LastURL of "E:\DSC00001.JPG".

Thus, in a case where the log can store 20 log information items from address 0 to address 19, if log information items to address 18 are filled, a new log information item (Rename, C:\DSC00005.JPG, C:\party.JPG) is stored at address 19. Also, it can be seen that a flag mark is added to the log information item stored first in the log (i.e., the log information item at address 0). This is to be used when a new log information item is added when the log is full.

If the log 53 is full to its storage capacity when new log information is desired to be stored, the log manager 52 deletes an item stored for the longest time in the log and adds the new log information at that location. Then, the start point is adjusted such that the stored log information items are rearranged in order of time.

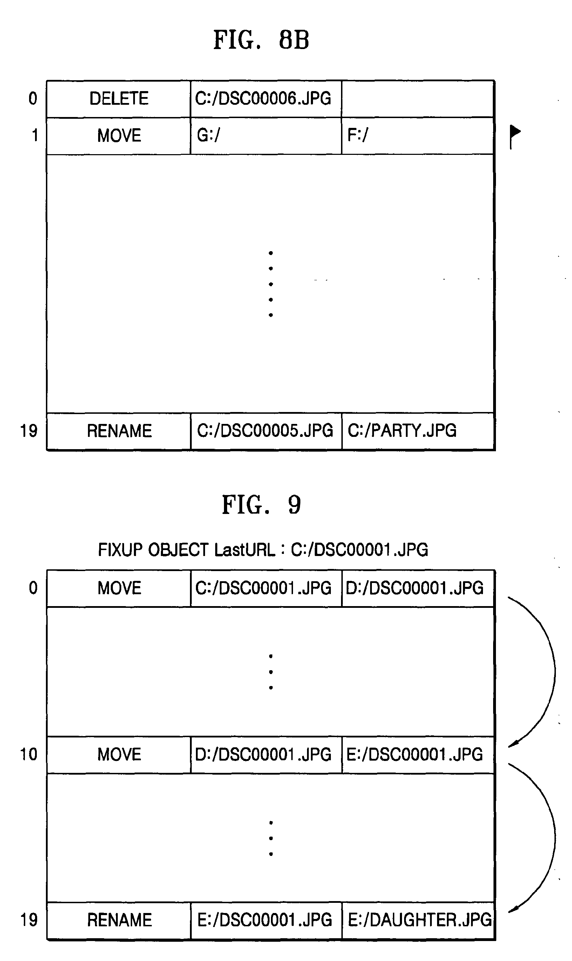

FIGS. 8A and 8B are reference diagrams explaining an operation storing a log information item when a log is full, according to an exemplary embodiment of the present invention.

Referring to FIG.8A, it is shown that the log is full from address 0 to address 19. At this time, in order to store a new log information item (Delete, C:\DSC00006.JPG) in the log, the log manager 52, first identifies a log item stored the longest time among the stored items. As explained with reference to FIG. 7, a log information item stored for the longest time is marked by a flag and the log manager 52 finds the flag mark. The log manager 52 deletes the log information item marked by a flag, and stores the new log information item (Delete, C:\DSC00006.JPG) in the location. Then, in order to identify a log information item stored for a longest time, a flag is marked to address 1 of the log. Referring to FIG. 8B, it is shown that a log information to be newly stored is stored at address 0 of the log and a flag is marked to address 1. Here, the marking of the flag by the log manager refers to making a pointer indicate an address.

Also, even when URL information on the entire log is changed due to a cause related to the system, the log manager 52 applies information on the thus changed log, to the log such that consistency of the log can be maintained. For example, when by adding a system such as a drive D, directory D:\ is changed to directory E:\, this is a change in hardware. In this case, a system event manager (not shown in FIG. 5) intercepting a hardware event is disposed to transmit directory change information to the log manager 52. Then, the log manager 52 applies this directory change information to the log 53 for modification.

The storage capacity of the log 53 should be determined effectively with respect to the usages of the system and contents. Also, a storage medium in which predetermined data can be quickly stored in or read from can be used as the log 53, and a non-volatile memory may be more preferable than a volatile memory. Thus, a rewritable optical disk, an HDD embedded in a DVD recorder, a memory stick, etc., can be used for a storage space of a log. Also, in a log, a predetermined form of a file can be stored, or a predetermined area of a system that is not in the form of a file can be assigned and stored.

The application 80 using a LastURL reference file reads a LastURL reference file 60 through the file system 70, and by tracking the LastURL, obtains a desired content. Also, when a desired content cannot be obtained because of a change in the LastURL, the application 80 using a LastURL reference file executes the LastURL fixup manager 54 according to an exemplary embodiment of the present invention.

The LastURL fixup manager 54 converts the LastURL that is the object of fixup to fit the format of log information items stored in the log 53. Further, LastURL fixup manager 54 retrieves log information items stored in the log 53 through a predetermined retrieval algorithm. Thus, the fixup object LastURL is compared with the sources of the log information items stored in the log 53.

At this time, when the fixup object LastURL is compared with the sources of the log information items stored in the log 53, the log 53 is searched with all directories included in the path of the fixup object LastURL, taken as objects of retrieval. For example, when the fixup object LastURL is G:\MyDocuments\MyMusic\Happysong.MP3, the LastURL fixup manager 54 searches the log 53 for the following directories and file:

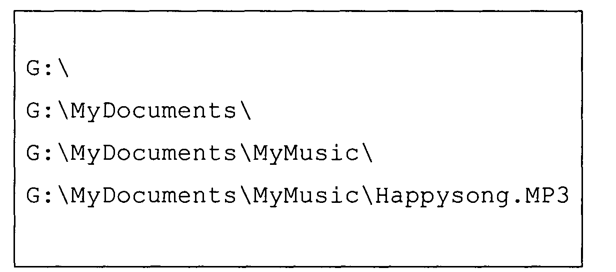

This is because a log information item stored in the log can be a directory as well as a file. Referring to FIG. 7, a log information item indicating that directory G:\ is changed to directory F:\ is stored at address 1 of the log. Since directory G:\ is changed to directory F:\, the original file G:\MyDocuments\MyMusic\Happysong.MP3 must have been changed to F:\MyDocuments\MyMusic\Happysong.MP3. Nevertheless, if only the fixup object file G:\MyDocuments\MyMusic\Happysong.MP3 is searched for, the fixup object file retrieval will fail in the log. Accordingly, in this case, all paths included in the LastURL, that is, G:\, G:\MyDocuments\, G:\MyDocuments\MyMusic\, and G:\MyDocuments\MyMusic\Happysong.MP3, should be searched for. Only after that, it can be found that directory G is changed to directory F and the LastURL can be effectively fixed up.

When a matching log information item is found as the result of comparison of the fixup object LastURL with sources stored in the log, the LastURL is fixed up according to the operation type of the log information item. For instance, when the operation type is "Move" or "Rename", the LastURL is fixed up by using a LastURL in the target field. Also, if the operation type is "Delete", fixup of the LastURL is finished because the file or directory has been deleted and fixup is impossible.

Meanwhile, with a partially fixed up LastURL, retrieval and fixup are continuously repeated along the entire log. This will now be explained with an example with reference to FIG. 9.

FIG. 9 is a reference diagram explaining an operation retrieving a log information item stored in a log according to an exemplary embodiment of the present invention.

Referring to FIG. 9, it is assumed that a fixup object LastURL is C:\DSC00001.JPG. The LastURL fixup manager 54 compares a LastURL in the source field of each log information item stored in the log 53 with the fixup object LastURL C:\DSC00001.JPG to find a matching log information item.

Since the source of a log information item at address 0 is C:\DSC00001.JPG, the LastURL fixup manager 54 initially fixes up the fixup object LastURL C:\DSC00001.JPG temporarily as D:\DSC00001.JPG, the target of the log information item at address 0. Here, "temporarily" fixing up means that this LastURL can be changed again because the entire log is not searched yet.

Next, the LastURL fixup manager 54 finds a log information item with a source identical to that of the temporarily fixed up LastURL D:\DSC00001.JPG, at address 10 of the log. The LastURL fixup manager 54 temporarily fixes up the temporarily fixed up LastURL D:\DSC00001.JPG as E:\DSC00001.JPG, the target of the log information item'at address 10.

Next, the LastURL fixup manager 54 finds a log information item with a source identical to that of the temporarily fixed up LastURL E:\DSC00001.JPG, at address 19 of the log. The LastURL fixup manager 54 fixes up the fixup object LastURL E:\DSC00001.JPG, as E:\daughter.JPG, the target of the log information at address 19. In this case, there are no more log information items in the log, and the LastURL is finally fixed up. Thus, since a LastURL can be moved or renamed many times, the LastURL fixup manager 54 searches the entire log with the fixup object LastURL such that a final fixed up result can be obtained.

The LastURL fixup manager 54 returns the finally fixed'up LastURL to the application 80 using a LastURL reference file. Meanwhile, if the LastURL fixup manager 54 cannot fix up a LastURL even after searching the entire log 53, the LastURL fixup manager 54 informs the application 80 that the fixup is failed, and the application can try to fix up a LastURL by applying the conventional method.

The application 80 using a LastURL reference file accesses contents by using the returned fixed up LastURL. Also, the application 80 using a LastURL reference file modifies the LastURL reference file by using the fixed up LastURL.

In one exemplary embodiment, the LastURL fixup apparatus 50 as described above is implemented in an embedded system in which most multimedia contents are stored. This is because file system operations are not performed frequently in an embedded system. Accordingly, the probability that changed contents are in a log is high such that the apparatus is effective and the implementation of a file system event manager is easy. The embedded system is, for example, a DVD player or a DVD recorder.

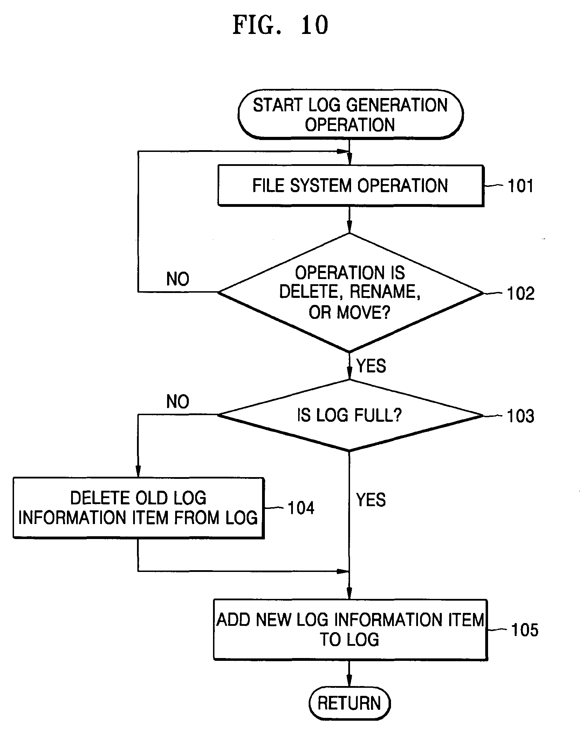

FIG. 10 is a flowchart of the operations performed by an operation generating a log according to an exemplary embodiment of the present invention.

Referring to FIG. 10, a file system operation is initially performed for a LastURL reference file in operation 101.

The file system event manger 51 of the LastURL fixup apparatus 50 then determines whether the operation occurring in the file system is delete, rename, or move of a file or directory in operation 102. If the operation is not any of delete, rename or move, it does not relate to change in a LastURL and operation 101 is performed to monitor a file system operation.

If the operation is any one of delete, rename, or move, the file system event manager 51 provides the operation information of the file system to the log manager 52.

The log manager 52 converts the received operation information into a log information item to fit a format to be stored in the log, and confirms whether or not the log is full in operation 103.

If the confirmation result indicates that there is a space to store log information items because the log is not full, the log manager 52 stores log information items in the empty space in operation 105. If the confirmation result indicates that the log is full and there is no space to store log information items, the log manager 52 deletes an old log information item from the log in operation 104, and adds and stores a log information item in the empty space in operation 105. This is explained above in detail with reference to FIGS. 8A and 8B.

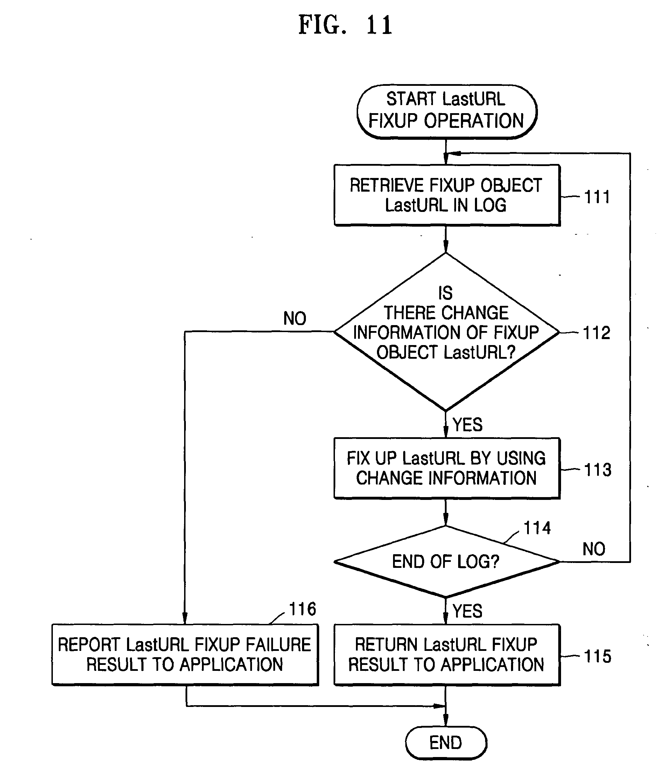

FIG. 11 is a flowchart of the operations performed by an operation fixing up a LastURL by a LastURL fixup manager according to a command from an application using a LastURL reference file according to an exemplary embodiment of the present invention.

Referring to FIG. 11, first, the LastURL fixup manager 54 of the LastURL fixup apparatus 50 receives LastURL information on a fixup object LastURL from the application 80, and searches log information items stored in the log for the fixup object LastURL in operation 111.

Then, it is determined whether or not there is change information of the fixup object LastURL in operation 112.

Thus, by comparing the source fields of log information items stored in the log with the fixup object LastURL, it is determined whether or not there is a matching one.

If there is change information, that is, if there is a matching log information item, the LastURL is fixed up by using the target field of the log information item in operation 113.

If one LastURL changes many times, the final change information should be retrieved to fix up the LastURL in order to correctly fix up the LastURL. Accordingly, the LastURL fixup manager 54 searches the log to the end for the fixup object LastURL.

That is, by using change information, the LastURL fixup manager 54 fixes up the LastURL and determines whether or not a current location is the end of the log in operation 114.

If it is the end of the log, all log information items of the log are searched and the currently fixed up LastURL is the final LastURL. Accordingly, the LastURL fixup result to that time is returned to the application 80 in operation 115.

However, if it is not the end of the log, the LastURL fixup manager 54 performs the operation 111 and retrieves the fixup object LastURL in the log.

If the result of determination in the operation 112 indicates that there is no matching log information item, the LastURL fixup manager 54 reports the LastURL fixup failure result to the application 80.

The application 80 receiving this LastURL fixup failure result, can try to fix up the LastURL by using the conventional LastURL fixup method other than the method of the present invention.

The LastURL fixup method according to the present invention described above can be used to implement a variety of digital products, such as a personal video recorder (PVR), and a DVD recorder, as well as a PC, which is easily understood by a person skilled in the art of the present invention.

Though exemplary embodiments of the present invention are explained mainly with an MPV file in the above embodiments, the embodiments are not so limited and can be effectively applied to any application that uses multimedia contents by generating a playlist, which is easily understood by a person skilled in the art of the present invention.

The LastURL fixup method as described above can also be embodied as computer readable code on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices, and carrier waves (such as data transmission through the Internet). The computer readable recording medium can also be distributed over network coupled computer systems so that the computer readable code is stored and executed in a distributed fashion. Also, functional programs, codes, and code segments for accomplishing the present invention can be easily construed by programmers skilled in the art to which the present invention pertains.

While aspects of the present invention have been particularly shown and described with reference to exemplary embodiments thereof, it will be understood by those of ordinary skill in the art that various changes in form and details may be made therein without departing from the spirit and scope of the present invention as defined by the following claims. The exemplary embodiments should be considered in descriptive sense only and not for purposes of limitation. Therefore, the scope of the invention is defined not by the detailed description of the invention but by the appended claims, and all differences within the scope will be construed as being included in the present invention.

According to the LastURL fixup method as described above, when change information on a changed LastURL is in a log, a time for fixing up can be effectively reduced such that the speed of application response to a user can be enhanced.

Also, when change information on a change during a file system operation of a directory is in a log and in the directory there are many files referred to by a LastURL reference file, the fixup time and processing power can be greatly reduced compared to the conventional technology.

Furthermore, when change information on a changed LastURL is in a log, a time for fixing up a LastURL is constant without being affected by the capacity of a storage device and the number or type of contents.

In addition, in case of an optical storage apparatus, when change information on a changed LastURL is in a log, the frequency of random access is reduced compared to that of the conventional technology such that a time for fixing up a LastURL decreases.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method for fixing up a last uniform resource locator (LastURL) representing the location of a content asset in a multimedia application environment, the method comprising:
managing location change information on a location change of the content asset; and
fixing up a LastURL by referring to the location change information.

2. The method of claim 1, wherein the managing the location change information comprises:
obtaining the location change information of the content asset; and
storing the location change information which is obtained in a log (53).

3. The method of claim 2, wherein the obtaining the location change information comprises:
monitoring the operation of a file system (70) related to the location change of the content asset; and
extracting the location change information of the content asset from a location change operation of the content asset.

4. The method of claim 3, wherein the location change operations of the content asset of the file system (70) comprise at least one of move, delete, and rename.

5. The method of any one of claims 2 to 4, wherein the storing the location change information which is obtained in a log (53) comprises:
converting the location change information of the asset into a log information item to be stored in the log (53); and
storing the log information item which is converted in the log (53).

6. The method of claim 5, wherein the log information item comprises at least one of the type of a location change operation of the asset, a source indicating a LastURL before the location of the asset changes, and a target indicating a LastURL after the location of the asset changes.

7. The method of claim 6, wherein the fixing up the LastURL comprises:
retrieving a log information item having a source identical to a fixup object LastURL in the log (53); and
fixing up the fixup object LastURL by using a LastURL corresponding to the target of the log information item which is retrieved.

8. A method for fixing up a LastURL representing the location of a content asset in a multimedia application environment, the method comprising:
recording location change information on a location change of the content asset in a log (53); and
providing the location change information recorded in the log to an application controlling the content asset.

9. A method for fixing up a LastURL representing the location of a content asset in a multimedia application environment, the method comprising:
obtaining location change information of a content asset having an invalid LastURL from a log in which location change information on a location change of the content asset is recorded; and
fixing up the invalid LastURL by using the location change information which is obtained.

10. An apparatus for fixing up a LastURL representing the location of a content asset in a multimedia application environment, the apparatus comprising:
a management unit which manages location change information on a location change of the content asset; and
a fixup unit (54) which fixes up a LastURL by referring to the location change information.

11. The apparatus of claim 10, wherein the management unit comprises:
a file system event manager (51) which obtains the location change information of the content asset; and
a log manager (52) which stores the obtained location change information in a log (53).

12. The apparatus of claim 11, wherein the file system event manager (51) monitors the operation of a file system (70) related to the location change of the content asset, and extracts the location change information of the content asset from a location change operation of the content asset.

13. The apparatus of claim 12, wherein the location change operations of the content asset of the file system (70) comprises at least one of move, delete, and rename.

14. The apparatus of claim 11, 12 or 13, wherein the log manager (52) converts the location change information of the asset into a log information item to be stored in the log (53) and stores the converted log information item in the log (53).

15. The apparatus of claim 14, wherein the log information item comprises at least one of the type of a location change operation of the asset, a source indicating a LastURL before the location of the asset changes, and a target indicating a LastURL after the location of the asset changes.

16. The apparatus of claim 15, wherein the fixup unit (54) retrieves a log information item having a source identical to a fixup object LastURL in the log (53), and fixes up the fixup object LastURL by using a LastURL corresponding to the target of the retrieved log information item.

17. An apparatus for fixing up a LastURL representing the location of a content asset in a multimedia application environment, the apparatus comprising:
a log recording unit (52) which records location change information on a location change of the content asset in a log (53); and
a LastURL fixup unit (54) which provides the location change information recorded in the log (53) to an application controlling the content asset.

18. An apparatus for fixing up a LastURL representing the location of a content asset in a multimedia application environment, the apparatus comprising:
a location change information obtaining unit (52) which obtains location change information of a content asset having an invalid LastURL from a log (53) in which location change information on a location change of the content asset is recorded; and
a LastURL fixup unit (54) which fixes up the invalid LastURL by using the location change information which is obtained.

19. A computer readable recording medium having embodied thereon a computer program for a method for fixing up a LastURL representing the location of a content asset in a multimedia application environment, wherein the method comprises:
managing location change information on a location change of the content asset; and
fixing up a LastURL by referring to the location change information.
